# EUROPEAN PATENT APPLICATION

(11) **EP 1 130 298 A1**
(43) Date of publication of application: **05.09.2001**
(21) Application number: 01200768.8
(22) Date of filing: 01.03.2001
(51) Int. Cl.: F16K 24/04

(54) **Water-repellent ventilation valve**

(30) Priority: 01.03.2000 NL 1014531
(71) Applicant: van der Velde, Ide Albert, 9673 CX Winschoten (NL); van der Velde-Mulder, Christina Elisabeth Hinderika, 9673 CX Winschoten (NL)
(72) Inventor: van der Velde, Ide Albert, 9673 CX Winschoten (NL); van der Velde-Mulder, Christina Elisabeth Hinderika, 9673 CX Winschoten (NL)
(74) Representative: Prins, Adrianus Willem

(57) **Abstract**

A ventilation valve for protecting a ventilation duct against penetration of spray or the like has a ventilation passage (7), which divides upward into at least two branches (8), a float chamber (9) between the branches (8), a float (10, 10') in the float chamber (9), an upper chamber (11), via which the float chamber (9) communicates with the branches (8), a valve seat (4), which can be shut when operated by the float (10, 10'), and at least two passages (12) at a level below the upper chamber (11), via which the float chamber (9) communicates with the surroundings in radially outward passage directions, and which passages (12) are each separated from the ventilation passage (7) by a bottom wall (13).
Because the bottom walls (13), viewed in cross-section, each have a central part (20) located deeper with respect to lateral parts (19) of the bottom wall (13), the resistance to which water is subjected when flowing to the branches is limited.

## Description

The invention relates to a ventilation valve according to the preamble of claim 1.

Such a ventilation valve is known from practice in the form of "G-valve" valves of the type "TYPE AUTO" marketed by John Gjerde As, Gjerdsvika, Norway.

The main function of such valves generally is to prevent spray, which in heavy weather washes over the deck of a ship or boat, from penetrating into a ventilation duct, of which the valve forms an end. In principle, such valves can of course also be used as shutters for ventilation ducts of other constructions which at sea or in inland waters are exposed to breaking waves.

Such valves are often used as ventilation nozzles for compensating pressure differences between tanks and the surroundings. Particularly in cases where the tank ventilated via the ventilation valve is a water tank, such as a ballast tank or a tank for storing tap water for use on board, it occurs that during the filling operation the tank flows over via the ventilation valve, before the operator of a pump with which the tank is filled has switched off the pump. In such cases it is highly important that the capacity of the valve is sufficient to prevent at a given pump delivery the building up of excessive pressure in the tank and in pipes and apparatus connected thereto, if present.

A further property that is of importance to such valves is a compact structure, because it is desirable if on a deck as little space as possible is taken up by obstacles.

It is an object of the invention to provide a ventilation valve for protecting a mouth of a ventilation duct against penetration of water from breaking waves which combines a compact structure with a high water passage capacity at a given excess pressure on the duct side of the valve.

This object is achieved according to the present invention by designing a valve of the above-identified type in accordance with the characterizing part of claim 1.

Because the bottom walls, viewed in cross-section transversely to the passage direction the passages, each have a central part located deeper with respect to outer parts, water or another liquid which reaches the area of the bottom walls of the passages via the ventilation passage, when flowing to the branches beginning at these bottom walls, is subjected to less resistance than when the bottom walls are of flat design, as is the case with the valve according to the state of the art. Furthermore, the bottom walls with a central part located deeper with respect to lateral parts render it possible to position the passages closer to a connecting surface of the valve, so that the float chamber can also be positioned closer to the connecting surface of the valve and the whole valve can have a relatively compact structure.

Special advantageous embodiments of the valve according to the invention will be described in the dependent claims.

Further objects, structural aspects, effects and details of the invention will appear from the following description of two exemplary embodiments of the valve according to the invention. In this description reference will be made to the drawings in which:
Fig. 1 is a side view in median longitudinal section taken along the line I-I in each of Figs. 2-4 of a valve according to a first exemplary embodiment of the invention,
Fig. 2 is a side view in cross-section taken along the line II-II in each of Figs. 1, 3 and 4,
Fig. 3 is a top view taken along the line III-III in Fig. 2,
Fig. 4 is a top view in cross-section taken along the line IV-IV in Fig. 2, and
Fig. 5 is a view corresponding to the view in Fig. 2 of a valve according to a second exemplary embodiment of the invention.

The ventilation valve is intended to protect a mouth of a ventilation duct of a ship or another structure exposed to waves, such as a drilling island, against penetration of spray or waves breaking in another form.

The valve according to the example shown has a housing 1 composed of a base part 2, a cover 3, and a valve seat 4. The base part 2 is provided with a flange 5 for mounting on an end of a ventilation duct. The flange 5 according to this example is provided with holes for receiving connecting elements such as bolts. It is also possible, however, to arrange the valve for attachment in another manner, for instance by welding. According to this example the parts 2-4 are cast from an aluminum alloy. It is also possible, however, to manufacture the valve from other materials, such as plastic or steel, and by means of other manufacturing techniques, such as by composing from parts of sheet material.

The base housing 2, on a connecting side 17 thereof, contains a ventilation passage 7, which, viewed in the operative position shown, divides upwardly into two branches 8.

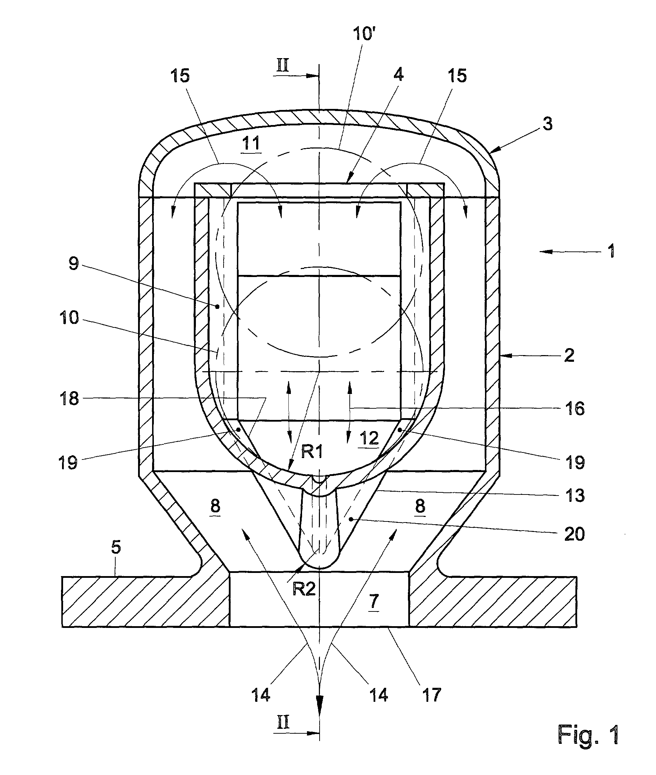

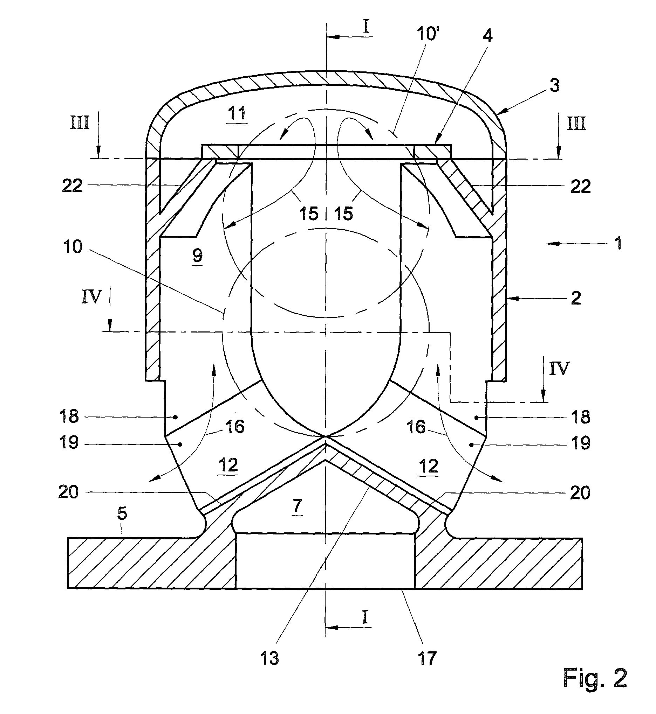

Centrally located between the branches 8 is a float chamber 9, in which a float 10 is situated. For the sake of convenience, the float 10 is represented by dot-dash lines. In Figs. 1 and 2 the float is indicated in a lower position by reference numeral 10 and in an upper position by reference numeral 10'. According to this example the float 10, 10' is designed as a hollow plastic ball.

Via an upper chamber 11, which is located above in the operative position shown, the central float chamber 9 communicates with the branches 8 of the ventilation passage 7.

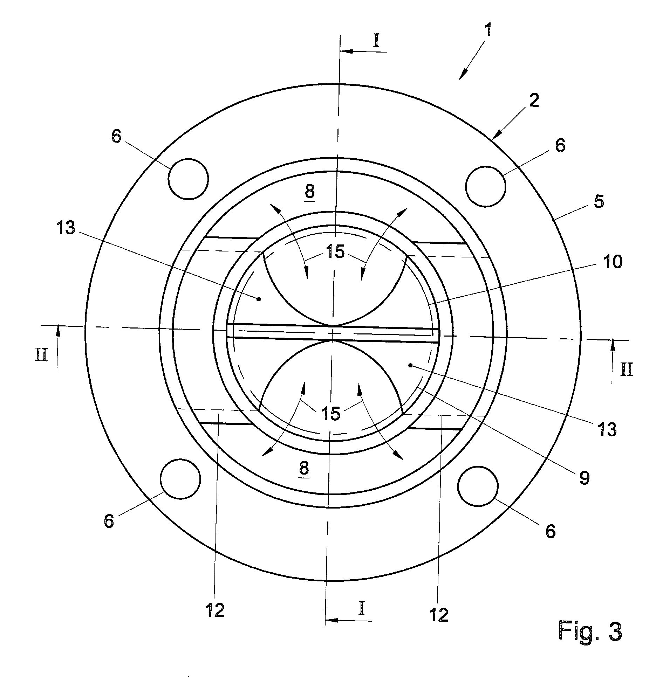

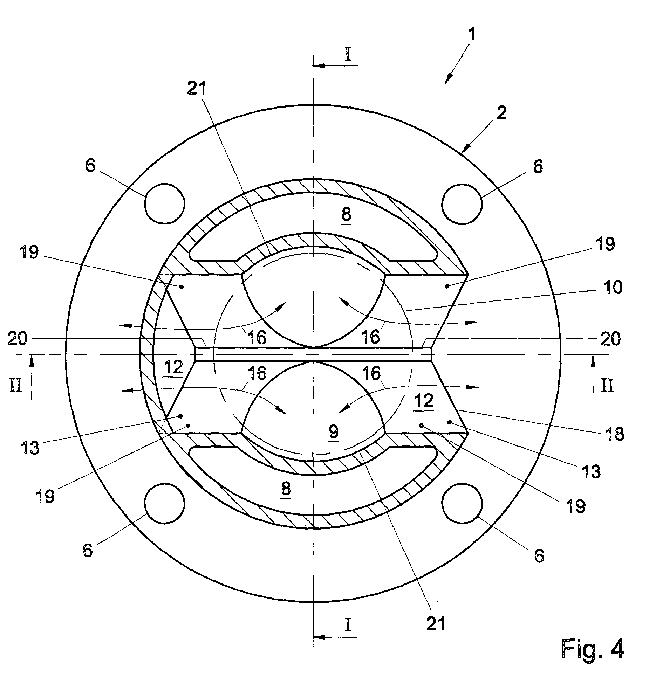

The float chamber 9 communicates with the surroundings via two passages 12, which, in the operative position shown, are located at a level below the upper chamber 11. As most clearly appears from Figs. 3 and 4, the passages 12 and the branches 8 alternate, viewed circumferentially around the float chamber 9, while the passages 12 are each separated from the ventilation passage 7 by a bottom wall 13.

In operation, pressure differences between a tank ventilated via the valve and the surroundings can be compensated, because air flows in or out via the valve, as indicated by arrows 14-16. When air or water flows out, the air or the water first flows via the ventilation passage 7 and the branches 8 thereof (arrows 14) to the upper chamber 11, where the air or water flow is deflected by the cover 3 in a direction via the valve seat 4 to the float chamber 9 (arrows 15). Subsequently, the water or the air flows along the ball 10 to the passages 12 and through the passages 12 to the surroundings.

In principle, flow in inward direction is only possible for air, because, when water flows from the outside to the inside, the ball moves from its lower position 10 to its upper position 10' and shuts the passage through the valve seat 4. The valve seat may be provided with, for instance, an O-ring or may be manufactured completely from elastic material to ensure an effective seal with respect to the ball 10'. If required, the valve seat 4, on its underside, may have a conical inner form which substantially widens downward, so that the ball 10' reliably falls back to its initial position when the water level in the area of the valve has fallen again.

It is also possible to use a valve body which is not formed by the float itself, but is operated by the float. Moreover, it is possible to use a float of different design, such as a disk-shaped float movable back and forth along a guide rod. Such floats are known per se in this field of the art.

As regards the passage capacity of the valve, in particular the capacity to pass water from the inside to the outside, that is to say from a connecting side 17 to outflow openings 18, is of importance. If this capacity is insufficient, it is possible that during the filling of a tank ventilated via the valve, when the tank flows over via the ventilation opening, a liquid causes the excess pressure in the tank to rise to such a degree that the tank is damaged. The increased resistance which occurs when liquid flows out via the valve can also lead to damage to the pump by which the tank is filled.

In the proposed valve according to this example the resistance to which water or another liquid is subjected when flowing out via the valve is relatively low, without the structure of the valve being voluminous, because the bottom walls 13, viewed in cross-section transversely to the passage direction of the passages 12, each have a central part 20 located deeper with respect to lateral parts 19 of the bottom wall 13. This aspect of the construction of the bottom wall 13 is most clearly visible in Fig. 1. The central part located deeper with respect to the lateral parts preferably extends over at least part of the length of each of the passages 12 at a distance from the median perpendicular of the valve 1. It is particularly preferred that the deeper located central part 20 extends over substantially the entire lengths of the passages 12.

Because of this construction of the bottom wall 13 the resistance to which a water flow is subjected when dividing into the branches 8 is low. Moreover, this construction of the bottom wall 13 of the passages 12 permits a relatively low positioning of the bottom wall 13, which, in turn, enables a low positioning of the float chamber 9 and thus a compact low structure of the valve.

In the valve according to the exemplary embodiment shown the resistance to which outflowing water is subjected when dividing into two flows through the branches 8 of the ventilation passage 7 is very low, because the bottom walls 13, viewed in cross-section transversely to the passage direction of the passages 12, are substantially V-shaped. The two branches 8 thus diverge gradually from each other, until a mutual distance has been reached which is sufficient to pass on both sides along the float chamber 9.

To limit the resistance to which water is subjected when dividing into flows through the branches 8, it is further advantageous that the bottom walls 13, viewed in cross-section transversely to the passage direction of the passages 12, each, at least in a central part 20 thereof, have a rounded configuration.

To limit the flow resistance, it is further advantageous that the radius of the central part 20 of the bottom wall 13 is rather small. Starting from a first radius R₁ of an at least partly spherical part of the bottom of the float chamber 9, the rounded central part 20 of the bottom wall 13 of the passages 12 has, at least over a part of the rounded configuration, a second radius R₂, which is smaller than the former radius R₁. The second radius R₂ is preferably at most 50% and more in particular preferably 10-25% of the former radius R₁. The radius R₂ of the rounded central part 20 of the bottom wall 13 of the passages 12 is thus substantially reduced with respect to the first radius R₁ of the spherical bottom part of the float chamber 9, so that a rounded, but yet slightly pointed shape of the cross-sections of the bottom walls 13 has been obtained.

As most clearly visible in Fig. 2, the bottom walls 13, viewed in the operative position, each extend from the float chamber 9 to the outside downward. This measure, also when the bottom walls 13, viewed in cross-section transversely to the passage direction of the passages 12, have no central parts 20 located deeper with respect to outer parts 19, offers the advantage that the float 10 is pushed up more effectively by the inflowing water. This is caused by the fact that the spray flowing via the passages 12 from the outside to the inside is guided up and thus acts on the float 10 with an upwardly directed component of movement. The outwardly sloping bottom walls 13, however, can be used very advantageously in combination with the bottom walls 13 which, viewed in cross-section transversely to the passage direction of the passages 12, have central parts 20 located deeper with respect to the outer parts 19, because this construction of the bottom walls 13 renders it possible to position them relatively low, without this having excessive negative consequences to the flow resistance to which the water passing to the branches 8 is subjected.

As most clearly appears from Fig. 4, the float 10 is guided in vertical recesses 21 in a wall 22 between the float chamber 9 and the branches 8. This guide of a spherical float is very robust and insensitive to dirt and ice.

In areas above the passages 8 the float chamber 9 has upwardly converging inner wall parts 22. Thus the capacity of the valve as regards the passage of liquid from the inside to the outside is further increased. Liquid which has risen via the branches 8 strikes against the lower surface of the cover 20 and divides at a rather acute angle to the cover in the float chamber 9. The converging inner wall parts 22 ensure that the liquid flow is guided downward in the direction of the outflow openings 18. Thus the flow resistance generated by the valve is further limited. This measure can also be used advantageously if the bottom walls, viewed in cross-section transversely to the passage direction of the passages, do not each have a central part located deeper with respect to outer parts of the bottom wall. In combination with this measure, the upwardly converging inner wall parts 22, however, offer an extra advantage, because through the proposed construction of the bottom walls 14 the flow through the branches and the float chamber 9 is extra strong and the resistance to which the liquid flows are subjected when passing from the branches 8 to the float chamber 9 also weighs relatively heavily.

The converging inner wall parts 22, viewed in the operative position, are preferably inclined at an angle of 20-60° to the vertical. An angle within this range and in particular an angle between the vertical and a part of the auto of 30-60° is advantageous to the guiding of the liquid flows with little resistance in a downward direction through the float chamber 9.

It will be clear to those skilled in the art that within the scope of the invention many alternative embodiments of the proposed valve are possible. Thus, for instance, the number of branches and the number of passages to the surroundings can be chosen larger, for instance of each three, four or five pieces. Furthermore, the housing may have another basic shape than the cylindrical basic shape shown in the drawings, such as a rectangular or trapezoidal basic shape.

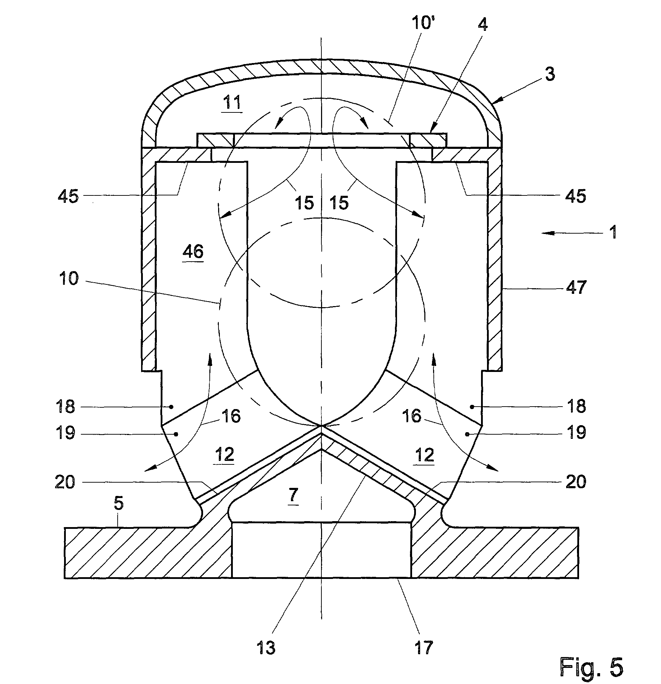

The valve according to example shown in Fig. 5 forms the exemplary embodiment of the invention most preferred at this moment. In Fig. 5 the parts corresponding to parts of the exemplary embodiment of Figs. 1-4 are indicated by the same reference numerals. The valve of Fig. 5 differs from the valve of Figs. 1-4 in that in areas above the passages 12 the float chamber 46 has no upwardly converging inner wall parts 22, but a radially inwardly directed flange 45. This offers the advantage that the mold from which the housing part 47 is cast is easier to manufacture.

## Claims

1. A ventilation valve for protecting a mouth of a ventilation duct against penetration of water from breaking waves, such as spray, comprising:
a ventilation passage (7), which, viewed in the operative position, divides upward into at least two branches (8),
a float chamber (9; 46) centrally located between said branches (8),
a float (10, 10') in the float chamber (9; 46),
an upper chamber (11), which, in the operative position, is located above, via which the float chamber (9; 46) communicates with said branches (8),
a valve seat (4), which can be shut when operated by said float (10, 10'),
at least two passages (12), which, in the operative position, are located at a level below said upper chamber (11), and via which the float chamber (9; 46) communicates with the surroundings in radially outward passage directions, and which passages (12) are each separated from the ventilation passage (7) by a bottom wall (13),
**characterized in that** said bottom walls (13), viewed in cross-section transversely to the passage direction of the passages (12), each have a central part (20) located deeper with respect to lateral parts (19) of the bottom wall (13).

2. A ventilation valve according to claim 1, wherein said bottom walls (13), viewed in cross-section transversely to the passage direction of the passages (12), are substantially V-shaped.

3. A ventilation valve according to claim 1 or 2, wherein said bottom walls (13), viewed in cross-section transversely to the passage direction of the passages (12), each, at least in a central part (20) of the bottom wall (13), have a rounded configuration.

4. A ventilation valve according to claim 3, wherein the float chamber (9; 46) has an at least partly spherical bottom having a first radius (R₁), and wherein said rounded configuration of at least one central part (20) of each of the bottom walls (13) has a second radius (R₂), which, at least over a part of the rounded configuration, is smaller than the first radius R₁.

5. A ventilation valve according to any one of the preceding claims, wherein said bottom walls (13), viewed in the operative position, are each inclined downwards from said float chamber (9; 46).

6. A ventilation valve according to any one of the preceding claims, wherein in areas above said passages (12) said float chamber (9) has upwardly converging inner wall parts (22).

7. A ventilation valve according to claim 6, wherein said converging inner wall parts (22), viewed in the operative position, are inclined at an angle of 20-60° to the vertical.
